# EUROPÄISCHE PATENTSCHRIFT

(11) **EP 1 029 746 B1**
(45) Veröffentlichungstag und Bekanntmachung des Hinweises auf die Patenterteilung: **10.05.2006**
(21) Anmeldenummer: 00100710.3
(22) Anmeldetag: 14.01.2000
(51) Int. Cl.: B60R 21/13, B60N 2/48

(54) **Überroll-Schutzsystem für Kraftfahrzeuge**
Roll-over protection for motor vehicles
Arceau de sécurité pour véhicules automobiles

(30) Priorität: 19.02.1999 DE 19906912
(43) Veröffentlichungstag der Anmeldung: 23.08.2000
(73) Patentinhaber: ISE Innomotive Systems Europe GmbH, 51702 Bergneustadt (DE)
(72) Erfinder: Schulte, Michael, 57462 Olpe (DE); Nowack, Reinhard, 57489 Drolshagen (DE); Nass, Michael, 51702 Bergneustadt (DE); Jesse, Rainer, 51702 Bergneustadt (DE)
(74) Vertreter: Fuchs Mehler Weiss & Fritzsche

(56) Entgegenhaltungen:
- EP-A- 0 459 213
- EP-A- 0 608 794
- EP-A- 0 850 808
- WO-A-91/02669
- DE-A- 3 922 509
- DE-U- 9 200 457
- US-A- 4 840 398
- US-A- 5 110 185
- US-A- 5 626 361

## Beschreibung

Die Erfindung bezieht sich auf ein Überroll-Schutzsystem für Kraftfahrzeuge mit integrierter Koptstütze, das jeweils einem Fahrzeugsitz zugeordnet ist, entsprechend dem Oberbegriff des Anspruches 1.

Überrollschutzsysteme, die in mannigfaltigen Ausführungsformen bekannt geworden und auch auf dem Markt sind, sollten typischerweise die Insassen von Cabriolets im Falle eines Überschlages vor einem Aufprall des Körpers auf die Fahrbahn bzw. den Erdboden schützen. Sie sind bei einer typischen Ausführungsform direkt hinter den Fahrzeugsitzen angeordnet und weisen einen Überrollbügel auf, der im Normalzusrand, gegen die Kraft einer Feder vorgespannt, von einer Kassette aufgenommen wird, und im Gefahrenfall, ausgelöst durch entsprechende Sensoren am Fahrzeug, sehr schnell in eine schützende Endposition gefahren werden kann. Neben vorgespannten Federn als Energiespeicher und Schnellantrieb kommen auch andere Systeme in Betracht, wie beispielsweise pyrotechnische Antriebe, hydraulische oder pneumatische Systeme, aber auch hochdrehende elektromotorische Spindelantriebe oder dergleichen.

Wenn der Überrollbügel mit seiner Kassette unmittelbar hinter der Rückenlehne des Fahrzeugsitzes angebracht ist, befindet er sich in unmittelbarer räumlicher Nähe zu der Kopfstütze, die typischerweise oben auf der Rückenlehne höhenverstellbar angebracht ist, damit sie in eine für die Insassen komfortable bzw. sicherbeilsmäßig notwendige Position bringbar ist. Es bietet sich daher an, die Kopfstütze mit dem Überrollbügel zu integrieren.

Durch die DE 39 30 171 C2 ist es bekannt, den Überrollbügel mit der Kopfstütze in der Weise zu integrieren, daß die Kopfstütze oben und seitlich mit einer nutartigen Vertiefung versehen ist, welche den Überrollbügel aufnimmt, wenn dieser in seiner Ruhestellung steht. Der Überrollbügel tritt dann weder optisch noch sicherheitsmäßig störend in Erscheinung.

In diesem bekannten Fall ist jedoch die Kopfstütze mit Nachteil nicht höhenverstellbar. Die Integration des Überrollbügels in die Kopfstütze hat den alleinigen Zweck der Abdeckung des Bügels.

Durch die DE 38 22 461 A1 ist ein Überrollschutzsystem bekannt geworden, das in der Weise mit der Kopfstütze integriert ist, indem das obere Ende des U-förmigen Überrollbügels unmittelbar als Kopfstütze ausgebildet ist und ein Kopfstützenpolster festlegt. Dieses Kopfstützenpolster ist enlang den Schenkeln des Überrollbügels und relativ zu diesen höhenverstellbar.
Konstruktionsbedingt ist allerdings das Kopfstützenpolster nur manuell höhenverstellbar.

Durch die DE 39 27 265 A1 ist eine angetriebene Kopfstütze mit integrierter Überrollschutzfunktion bekannt geworden, die sich, angetrieben durch einen Elektromotor, stufenlos in verschiedene Stellungen verfahren läßt, wobei aus jeder Stellung heraus das Überrollschutzsystem bei einer Gefahrensituation in die maximale Endstellung gebracht werden kann. Das bekannte System weist ein Gehäuse aus Blechformteilen auf, welches mit dem Fahrzeugaufbau verschraubbar ist und welches hinter den Rücksitzen des Cabriolets angeordnet wird. Im Gehäuse ist ein U-förmiger Überrollbügel in Form eines entsprechend gebogenen Stahlrohres verschiebbar mittels Führungsrollen gelagert. Der Überrollbügel ist dabei mit einem die Kopfstütze bildenden Kopfstützkissen versehen, d.h. ebenfalls mit der Kopfstütze voll integriert.

An dem Überrollbügel greifen zwei Antriebs-Druckfedern an, die im vorgespannten Zustand gehalten werden. Zwischen den Druckfedern ist eine elektromotorische, fahrzeugfest gehalterte Antriebseinheit mit Getriebe, Zahnriemen und einem Ritzel, das mit einer Verzahnung am Überrollbügel in Wirkeingriff steht, angeordnet. Der Zahnriemen ist dabei mit dem Getriebe über ein Zahnrad gekoppelt, das über eine Kupplung mit radial verschiebbaren Kugelelementen von einer Welle eines mit dem Getriebe in Wirkeingriff stehendem Zahnriemenantriebes angetrieben wird. Diese Welle steht mit einem Auslösemagneten in Verbindung, der im Gefahrenfall in der Kupplung die Welle vom Zahnrad trennt, wodurch der Zahnriemen vom Getriebe abgekoppelt wird. Dadurch wird der Überrollbügel freigegeben und wird mittels der Druckfedern in seine Endposition gebracht. Dieses bekannte Überrollschutzsystem hat folgende Nachteile:
- Die Grundelemente des Überrollsystems (Kassette und Bügel) sind nur relativ aufwendig herzustellen.
- Die Antriebsanordnung zum kontinuierlichen Verfahren des Überrollbügels, der sogenannte Komfortantrieb, der gleichzeitig zur Höheneinstellung der Kopfstütze dient, ist relativ komplex und im Hinblick auf den Zahnriementrieb auch relativ reparaturanfällig.
- Das Auslösesystem zwischen Überrollbügel und Auslösemagnet zur Freigabe des Überrollbügels im Überschlagfall ist komplex und nur umständlich nach einer Auslösung wieder in die Ausgangslage zu bringen.
- Beim kontinuierlichen Verfahren des Überrollbügels mit der Kopfstütze wird die Spannung der Antriebs-Druckfedern beeinflußt. Insbesondere muß beim Herunterfahren des Bügels der Elektromotor gegen die Vorspannung der Druckfedern arbeiten und muß daher entsprechend stark dimensioniert werden.

Die EP-A-0 459 213 zeigt ein Überroll-Schutzsystem mit den Merkmalen des Oberbegriffes des Anspruchs 1. Im bekannten Fall ist der Überrollkörper als U-förmiger, aus einem gebogenen Rohr hergestellter Überrollbügel ausgebildet. Ferner ist bei dem bekannten System kein gesonderter Schnellantrieb vorgesehen, sondern es ist nur ein einziges elektromotorisches Antriebssystem mit unterschiedlichen Drehzahlen für Komfort- und Schnellantrieb im Crashfall vorgesehen. Es sind zwar das schnelle Aufstellen unterstützende Druckfedern vorgesehen, jedoch sind sie nicht vom elektromotorischen Antrieb abgekoppelt, d.h. sie werden durch die Trägheit des elektromotorischen Antriebes behindert, weil abgebremst. Das bekannte System kann daher durch die Trägheit des elektromotorischen Antriebes die Forderung einer Ausfahrzeit von < 300 ms im Crashfall nicht erfüllen. Ferner bedingt die bekannte Unterbringung der Druckfedem, dass beim kontinuierlichen Verfahren mit dem Komfortantrieb die Druckfedern mit Nachteil fortlaufend komprimiert und entspannt werden. Ferner ist im bekannten Fall der innere Profilkörper, d.h. der Überrollbügel, nicht lösbar mit der Traverse verbunden. Die Traverse ist vielmehr fest, die Schenkelenden miteinander verbindend, an dem Überrollbügel angebracht.
Schließlich fehlt noch im bekannten Fall die sichere erforderliche Abstützung für den ausgefahrenen Bügel. Die beschriebene Gewindespindel mit steilgängigem Gewinde kann die Abstützkräfte im Überschlagsfall nicht übertragen.

Der Erfindung liegt die Aufgabe zugrunde, das eingangs bezeichnete Überrollschutzsystem so auszubilden, dass es kostengünstig herzustellen ist, eine einfache Antriebsanordnung zum kontinuierlichen Verfahren des Überrollkörpers und der Kopfstütze, die keinen Einfluß auf den Schnellantrieb für den Überschlagfall hat, sowie einen gesonderten, einfachen Schnellantrieb besitzt.

Die Lösung dieser Aufgabe gelingt bei einem Überroll-Schutzsystem für Kraftfahrzeuge mit integrierter Kopfstütze, das jeweils einem Fahrzeugsitz zugeordnet ist, mit
- einem äußeren, eine Kassette für die Komponenten des Überroll-Schutzsystems bildenden, fahrzeugfest anbringbaren Kastenprofil-Körper ,
- einem inneren, verschiebbar in dem äußeren Kastenprofil-Körper über Führungselemente gehalterten Profilkörper , der als Überrollkörper ausgelegt ist, und
- einer Antriebsanordnung für ein kontinuierliches Verfahren des inneren Profilkörpers, bestehend aus einem Elektromotor mit Getriebe und einer Gewindespindel vorgegebener Länge sowie aus einer in dem äußeren Kastenprofil-Körper verschiebbaren Traverse des inneren Profilkörpers , die eine Mutter zum Wirkeingriff mit der Gewindespindel besitzt,
gemäß der Erfindung dadurch, dass die Traverse mit dem inneren, aus einem Kastenprofil gebildeten Profilkörper , der einen gesonderten Schnellantrieb für ein Ausfahren dieses Kastenprofils in die obere, gegenüber dem äußeren Kastenprofil-Körper verriegelbare Schutz-Endstellung im Gefahrenfall aufnimmt, sensorgesteuert im Gefahrenfall lösbar, verbunden ist, und dass der Schnellantrieb durch eine vorgespannte Antriebs-Druckfeder gebildet ist, die in dem inneren Kastenprofil angeordnet ist, und die sich mit einem, dem oberen Ende, an einem oberen Quersteg des inneren Kastenprofils abstützt und die mit ihrem anderen, unteren Ende mit der Traverse in fester Verbindung steht.

Gegenstand der Erfindung ist somit ein Überrollschutzsystem mit integrierter Kopfstütze, das sowohl einen Schnellantrieb (Crash-Antrieb) für ein schnelles Ausfahren des Überrollkörpers als auch einen davon entkoppelbaren getrennten elektromotorischen Antrieb für ein kontinuierliches Verfahren des Überrollkörpers, insbesondere zum Einstellen der Höhe der Kopfstütze, den sogenannten Komfortantrieb, aufweist.
Die Entkoppelbarkeit des Schnellantriebes bewirkt, dass dieser nicht durch die natürlich Trägheit des Komfortantriebes behindert wird.

Ferner bewirkt das erfindungsgemäße System, bei dem der Schnellantrieb in dem inneren Kastenprofil aufgenommen ist, welches auf der Traverse lösbar aufsitzt, dass der Schnellantrieb, die Antriebs-Druckfeder, beim kontinuierlichen Verfahren des inneren Kastenprofils durch den Komfortantrieb über die Traverse unbeeinträchtigt bleibt.

Eine besonders einfache und kompakte Ausführung des erfindungsgemäßen Überroll-Schutzsystems läßt sich durch Integration der Kopfstütze in den Überrollkörper erzielen, indem am oberen Teil des inneren Kastenprofils ein die Kopfstütze bildendes Kopfstützenpolster angeformt ist.

Prinzipiell ist es jedoch denkbar, die Kopfstütze von dem Überrollkörper zu trennen, indem neben dem inneren Kastenprofil parallel zu diesem mindestens ein weiterer langgestreckter, in dem äußerten Kastenprofil geführter Formkörper auf der Traverse befestigt ist, an dem im oberen Bereich insassenzugewandt vor dem inneren Kastenprofil ein die Kopfstütze bildendes Kopfstützenpolster angeformt ist.

Um das innere Kastenprofil in dem äußeren Kastenprofil im notwendigen Maße gut zu führen, ist gemäß einer Ausgestaltung der Erfindung das System so ausgebildet, daß an dem inneren Kastenprofil als Führungselemente Führungsrollen angebracht sind und im äußeren Kastenprofil Führungsrillen zur Führung der Führungsrollen und der Traverse ausgeformt sind. Eine derartige Konstruktion ist durch die EP-A-0 608 794 bekannt geworden. Ein besonders einfaches und wirksames System läßt sich gemäß einer Weiterbildung der Erfindung erzielen, wenn das innere Kastenprofil über ein dieses Kastmprofil im Gefahrenfall freigebendes Auslösesystem mit einem Aktuator verbunden ist, der fest auf der Traverse angebracht ist.

Durch diese Konstruktion kann daher im Gefahrenfall der Schnellantrieb mit einfachen Mitteln das innere Kastenprofil bei jeder Stellung der Traverse sicher in die obere Schutz-Stellung verfahren.

Für die Verbindung des inneren Kastenprofils über das Auslösesystem mit dem Aktuator auf der Traverse und für die Verriegelung dieses Kastenprofils nach dem Auslösen gegen ein ungewolltes Wiedereinsetzen sind mehrere konstruktive Lösungen denkbar. Ein besonders einfacher Aufbau läßt sich gemäß einer Weiterbildung der Erfindung erzielen, wenn an dem inneren Kastenprofil über eine Welle eine Verriegelungsklinke mit Zahnprofil angelenkt ist, die über das Auslösesystem mit dem im Gefahrenfall aktivierten Aktuator lösbar verbunden ist, und wenn im Innern des äußeren Kastenprofils eine Zahnstange fest angebracht ist, mit der das Zahnprofil der Verriegelungsklinke im Gefahrenfall nach Freigabe der Verriegelungsklinke durch das Auslösesystem mittels an der Verriegelungsklinke angreifender Druckfedern in Wirkverbindung bringbar ist.

Diese Konstruktion benötigt nur wenige Bauteile, die ohne größeren Aufwand herzustellen sind und auch eine relativ einfache Montage ermöglichen.

Für die Ausbildung und Anlenkung der Verriegelungsklinke stehen verschiedene Möglichkeiten zur Verfügung. Eine erste Ausführungsform ergibt sich, wenn gemäß einer weiteren Ausgestaltung der Erfindung die Verriegelungsklinke als zweiarmiger Hebel ausgebildet ist, mit einem gegenüber der Anlenkung längeren, oberen und einem kürzeren, unteren Hebelarm, wobei an dem längeren, oberen Hebelarm, an dem die Druckfedern angreifen, das Zahnprofil, und an dem kürzeren, unteren Hebelarm ein Verrastbolzen für einen lösbaren Wirkeingriff mit einem hakenförmigen Verriegelungselement des Aktuators, das Auslösesystem bildend, angebracht ist.

Eine zweite, für die Kräfteaufteilung günstigere Möglichkeit ergibt sich, wenn gemäß einer Weiterbildung der Erfindung die Verriegelungsklinke als einarmiger Hebel ausgebildet ist, der am oberen Ende über die Welle an dem inneren Kastenprofil angelenkt ist, der in einem Zwischenabschnitt, an dem die Druckfedern angreifen, mit dem Zahnprofil versehen ist, und an dessen unterem Ende ein für einen lösbaren Wirkeingriff mit einem hakenförmigen Verriegelungselement des Aktuators, das Auslösesystem bildend, angebracht ist.

Der Aufbau des vorbeschriebenen Verriegelungssystems besitzt daher folgende wesentlichen Charakteristiken:
+ Verriegelungsklinke und Verrastbolzen bilden eine Einheit
+ Das System Traverse - Aktuator - Verriegelungsklinke - Verrastbolzen - Druckfedern - Inneres Kastenprofil bildet bei Komfortbetrieb eine Einheit.
+ Durch Auslösen des Aktuators wird dieses System in zwei Einzelkomponenten getrennt.
+ Durch den elektrischen Antrieb der Traverse ist eine fernbediente Reversierung des Schnellantriebssystems möglich.

Für die Anordnung des Überrollschutzsystems in dem Fahrzeug bestehen eine Reihe von Möglichkeiten.

Gemäß einer bevorzugten Ausführungsform ist es auf einfache Weise möglich, das System in dem Fahrzeugsitz zu integrieren, indem sowohl das innere als auch das äußere Kastenprofil kreisbogenförmig gekrümmt sind und das äußere Kastenprofil hinter dem Fahrzeugsitz, vorzugsweise an der Fahrzeugrückwand, befestigt ist. Dieser Drinzip ist durch die WO-A-91 02 669 bekannt geworden (=DE 3927265 A1 wie eingangs Zifiert).

Es ist aber auch moglich, die Kastenprofile linear auszubilden, und das die Kassette bildende äußere Kastenprofil jeweils unmittelbar hinter den Fahrzeugsitzen anzubringen.

Weitere ausgestaltende Merkmale der Erfindung ergeben sich anhand der Beschreibung eines in den Zeichnungen dargestellten Ausführungsbeispieles.

Es zeigen:
- Fig. 1: in einer Längsschnitt-Darstellung eine Ausführungsform des Überroll-Schutzsystems mit kreisbogenförmig gebogenem inneren und äußeren Kastenprofil und einer unmittelbar in dem inneren Kastenprofil integrierter Kopfstütze, dargestellt in der Ausgangsstellung bei vollständig eingefahrenem inneren Kastenprofil,
- Fig. 2: eine Ausführungsform entsprechend Fig. 1, jedoch mit teilweise ausgefahrenem inneren Kastenprofil bzw. Kopfstütze,
- Fig. 3: eine Ausführungsform entsprechend Fig. 1, jedoch mit vollständig ausgefahrener Kopfstütze,
- Fig. 4: eine Ausführungsform entsprechend Fig. 1 mit nach einem Crash ausgefahrenem inneren Kastenprofil in der Funktion als Überrollbügel, ausgehend von einer Stellung des Komfortantriebes entsprechend Fig. 2,
- Fig. 5: eine Darstellung entsprechend Fig. 4, jedoch ausgehend von einer Stellung des Komfortantriebes nach Fig. 3,
- Fig. 6: eine Ausschnittsvergrößerung aus der Fig. 5 unter Darstellung der Verriegelung des inneren Kastenprofils mittels einer ersten Ausführungsform der Verriegelungsklinke in einer Zahnstange im äußeren Kastenprofil im verriegelten Zustand,
- Fig. 7: eine Darstellung analog Fig. 6, jedoch im Zustand unmittelbar vor der Verriegelung,
- Fig. 8: in einer Explosionsdarstellung die wesentlichen Elemente der ersten Ausführung des Verriegelungssystems für die Verriegelung des inneren Kastenprofils mit dem äußeren Kastenprofil sowie des Auslösesystems für das innere Kastenprofil im Crash-Fall,
- Fig. 9: in einer vereinfachten Längsschnittdarstellung die Führung des inneren Kastenprofils in dem äußeren Kastenprofil sowie die wesentlichen Elemente des Komfort-Antriebes zur Verstellung der Kopfstütze im Normalbetrieb,
- Fig. 10: in einer Querschnittsansicht entlang der Schnittlinie I-I in Fig. 2 die Führung des inneren Kastenprofils durch an ihm angebrachte Führungsrollen in entsprechenden Führungsrillen im äußeren Kastenprofil,
- Fig. 11: in einer Explosionsdarstellung entsprechend Fig. 8 die wesentlichen Elemente der zweiten Ausführung des Verriegelungssystems für die Verriegelung des inneren Kastenprofils mit dem äußeren Kastenprofil sowie des Auslösesystems für das innere Kastenprofil im Crash-Fall,
- Fig. 12: in einer vergrößerten Ausschnittdarstellung die Verriegelung der einarmigen Verriegelungsklinken nach Fig. 11 mit dem Aktuator des Auslösesystems,
- Fig. 13: in einer Längsschnitt-Darstellung eine Ausführungsform des Überroll-Schutzsystems mit der einarmigen Verriegelungsklinke nach Fig. 11 mit vollständig herausgefahrener Kopfstütze entsprechend der Fig. 13,
- Fig. 14: eine Ausführungsform entsprechend Fig. 13 mit nach einem Crash vollständig ausgefahrenem inneren Kastenprofil in der Funktion als Überrollbügel, ausgehend von einer Stellung des Komfortantriebes entsprechend Fig. 2,
- Fig. 15: in einer Längsschnitt-Darstellung eine Ausführungsform des Überroll-Schutzsystems mit der einarmigen Verriegelungsklinke entsprechend der zweiten Ausführung nach Fig. 11 in einer Stellung der Kopfstütze nach einem Crash bei einer Stellung des Komfortantriebes entsprechend Fig. 5 unmittelbar vor dem Reversiervorgang,
- Fig. 16: in einer vergrößerten Ausschnitt-Darstellung der Beginn der Einfahrbewegung des einarmigen Hebels in den Aktuator des Auslösesystems,
- Fig. 17: in einer vergrößerten Ausschnittdarstellung die Stellung der Verriegelungsklinke beim Reversieren des Überrollbügels unmittelbar vor der Verriegelung mit dem Auslösesystem,
- Fig. 18: in einer schematischen perspektivischen Darstellung eine weitere Ausführungsform des Überroll-Schutzsystems mit geraden, inneren und äußeren Kastenprofilen bei eingefahrener Kopfstütze, und
- Fig. 19: eine Darstellung entsprechend Fig. 18, jedoch mit ausgefahrener Kopfstütze.

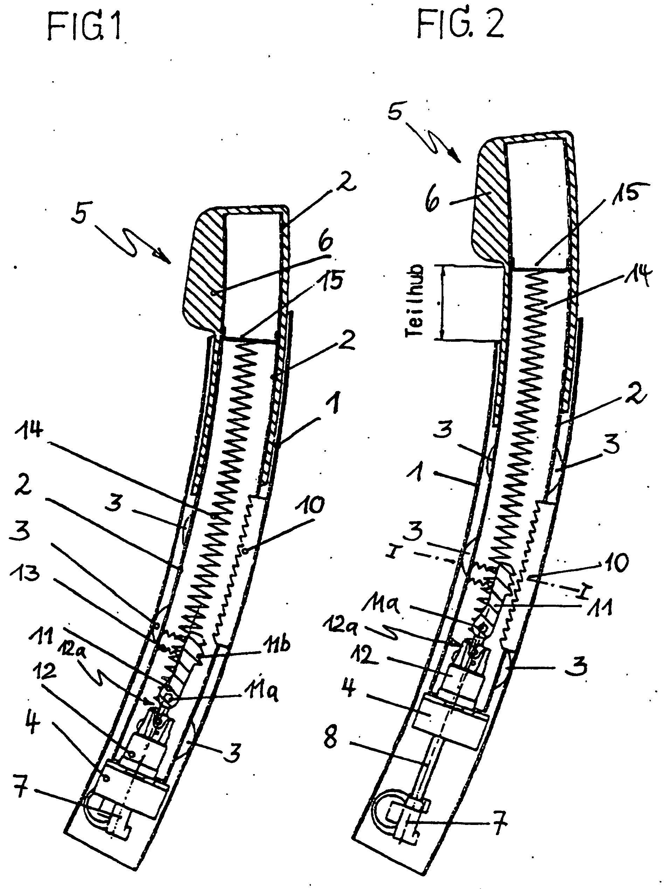

Die Fig. 1 sowie die Figuren 2 bis 5 zeigen in einer schematischen Darstellung einen Längsschnitt durch eine bevorzugte Ausführungsform der erfindungsgemäß angetriebene Kopfstütze für einen PKW-Sitz im Fondbereich eines Cabriolet mit integrierter Überrollschutzfunktion.

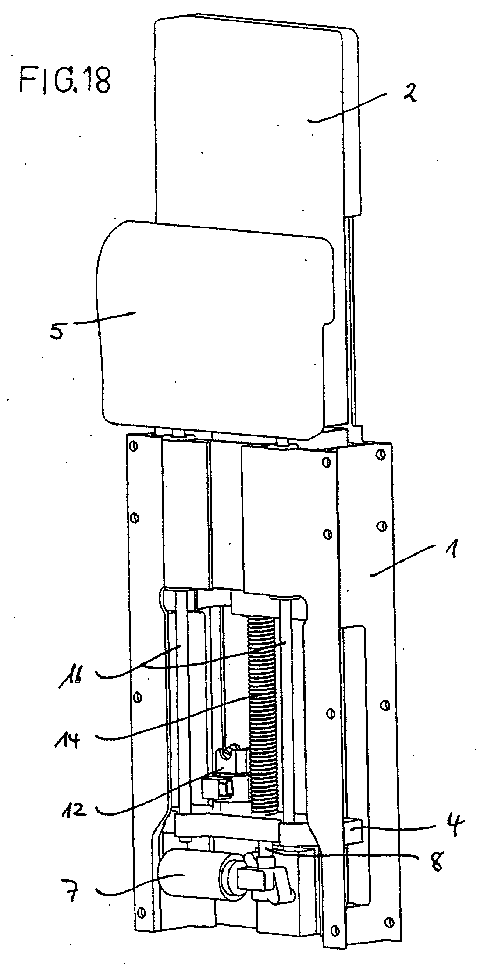

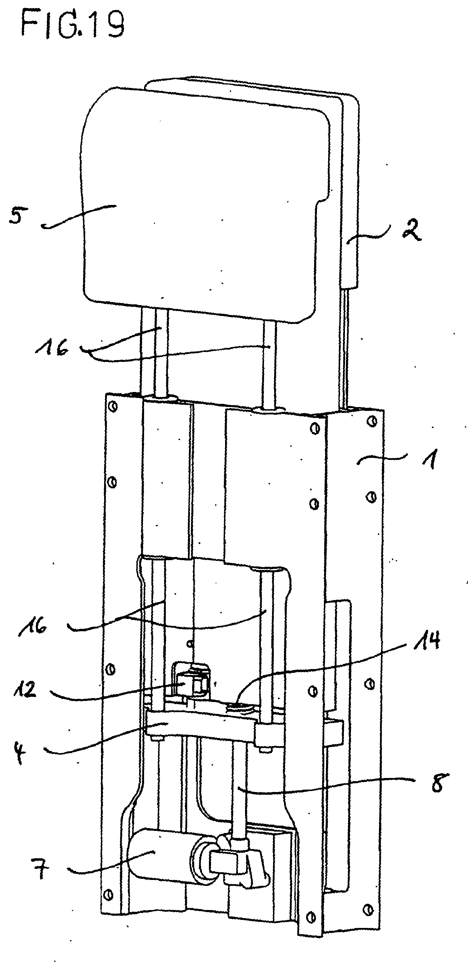

In den Fig. 2 bis 5 ist eine Ausführung mit einer Kurvenbahn für den Antrieb vorgesehen; es ist natürlich auch möglich, eine gradlinige Bahn für den Antrieb vorzusehen, wie noch anhand der Figuren 18 und 19 beschrieben werden wird.

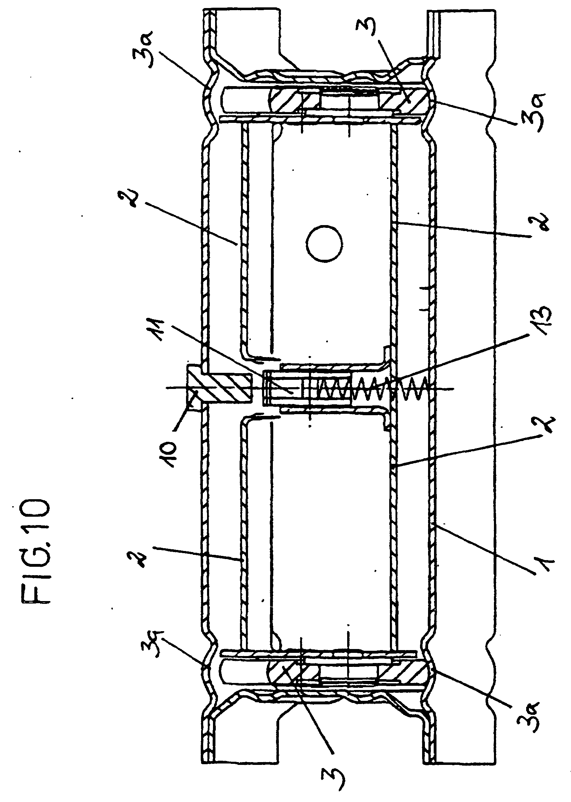

Die erfindungsgemäße Ausführungsform weist als Grundkörper zwei Kastenprofile auf, ein äußeres, mit der Karosserie fahrzeugfest verbundenes Kastenprofil 1 nach Art einer Kassette, die alle Antriebsteile aufnimmt, und ein inneres Kastenprofil 2, welches, wie in Fig. 10 anhand einer Querschnittsansicht entlang der Linie I - I in Fig. 2 dargestellt, über an ihm seitlich angebrachte Laufrollen 3 in dem äußeren Kastenprofil 1 geführt ist (siehe auch Fig. 9), und welches mit einer Traverse 4 lösbar verbunden ist. Zur stabilen Führung des inneren Kastenprofils 2 und der Traverse 4 sind in dem äußeren Kastenprofil 1 Führungsrillen 3 a für die Laufrollen 3 ausgebildet.

Beide Kastenprofile 1 und 2 werden vorzugsweise durch eine Stahlschweißkonstruktion oder durch Aluminium-Strangpreßprofile gebildet.

An dem inneren Kastenprofil 2 ist eine Kopfstütze 5 ausgebildet. Diese Kopfstützen-Funktion wird durch eine Aufschäumung 6 mit einem geeigneten Kunststoff auf dem oberen Teil des inneren Kastenprofils 2 mit anschließender üblicher Endbearbeitung erzielt. Das innere Kastenprofil 2 ist im Bereich der Kopfstütze 5 mechanisch so stabil ausgebildet, daß es auch die Funktion des Überrollbügels im Überschlagfall übernehmen kann.

Die Aufschäumung 6 setzt sich vorzugsweise bis in den Führungsbereich des Kastenprofils 2 fort, damit auch im ausgefahrenen Zustand der Kopfstütze (Fig. 2-5) noch ein Aufprallschutz gegeben ist.

Zum Antrieb der Traverse 4, die mit dem inneren Kastenprofil 2 lösbar verbunden ist und damit zum Aus- und Einfahren der Kopfstütze 5, ist ein Antrieb 7, vorzugsweise ein Elektromotor mit Getriebe und einer länglichen Antriebsspindel 8 vorgesehen, wobei in der Traverse 4 eine Spindelmutter 9 zur Aufnahme der Antriebsspindel vorgesehen ist, die bei der dargestellten Ausführungsform mit gekrümmter Bewegungsbahn drehbar und linear beweglich gelagert ist (Fig. 9).

Im Inneren des äußeren Kastenprofils 1 ist eine Zahnstange 10 angebracht, die in Wirkeingriff mit einer Verriegelungsklinke 11, die im vorliegenden Beispiel drei Gegenzähne zu den Zähnen der Zahnstange aufweist, bringbar ist. Diese Verriegelungsklinke 11 ist drehbar um eine Welle 11a an dem inneren Kastenprofil 2 befestigt, und steht in Wirkeingriff mit vorgespannten Druckfedern 13.

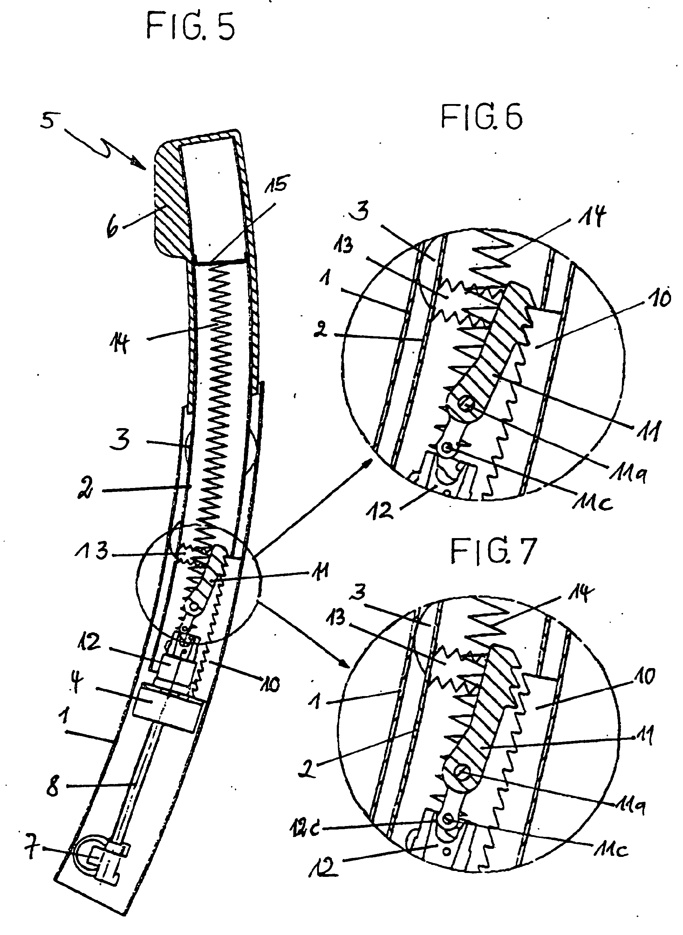

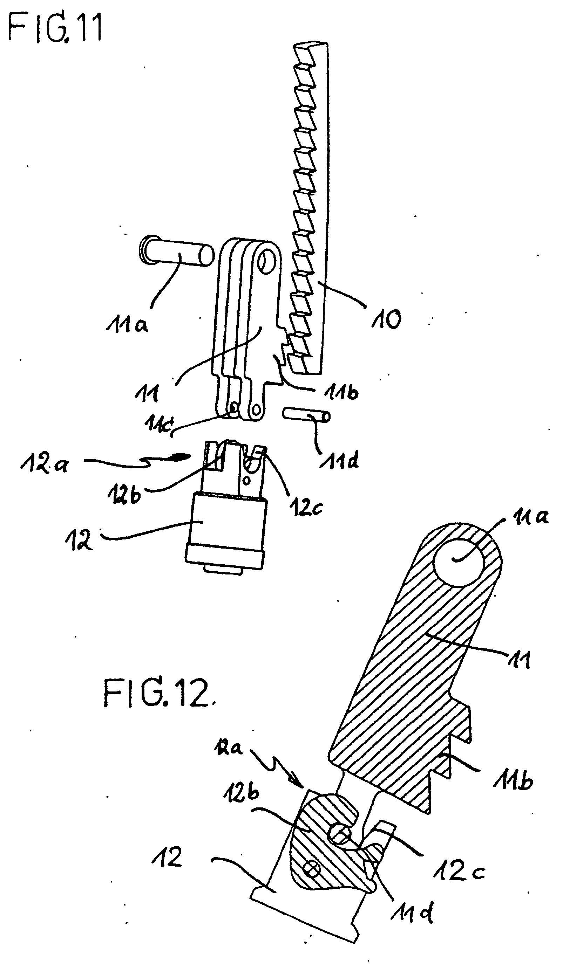

Auf der Traverse 4 ist ein sog. Aktuator 12 befestigt, der durch einen konventionellen Auslösemagnet oder durch eine konventionelle pyrotechnische Patrone gebildet werden kann. Die Verriegelungsklinke 11 steht dabei über ein Auslösesystem 12a im lösbaren verriegelnden Wirkeingriff mit dem Aktuator 12. Diese im Gefahrenfall lösbare Wirkverbindung wird später anhand der Figuren 6-8 noch im einzelnen erläutert werden. Eine alternative Ausfühnmgsform wird anhand der Figuren 11 und 12 noch beschrieben.

Die Verriegelungsklinke 11 verbindet daher über den Aktuator 12 das bewegliche innere Kastenprofil 2 mit der angetriebenen Traverse 4 zu einer lösbaren Einheit. In dieser Einheit sind sowohl die vorgespannten Druckfedern 13 für die Verriegelungsklinke 11 als auch eine vorgespannte, den Überrollbügel in Form des inneren Kastenprofils im Gefahrenfall antreibende Druckfeder 14 integriert, wobei die Druckfeder mit ihrem oberen Ende vorzugsweise über eine Druckscheibe an einer Zwischenwand 15 des inneren Kastenprofils 2 anliegt, und wobei die vorgespannte Druckfeder 14 sich mit dem unteren Ende auf der Traverse abstützt. Diese Druckfeder 14 kann dabei vorzugsweise mittels eines Federführungsbolzens (nicht dargestellt) geführt sein, wie es beispielsweise durch die eingangs zitierte DE 39 27 265 A1 bekanntgeworden ist.

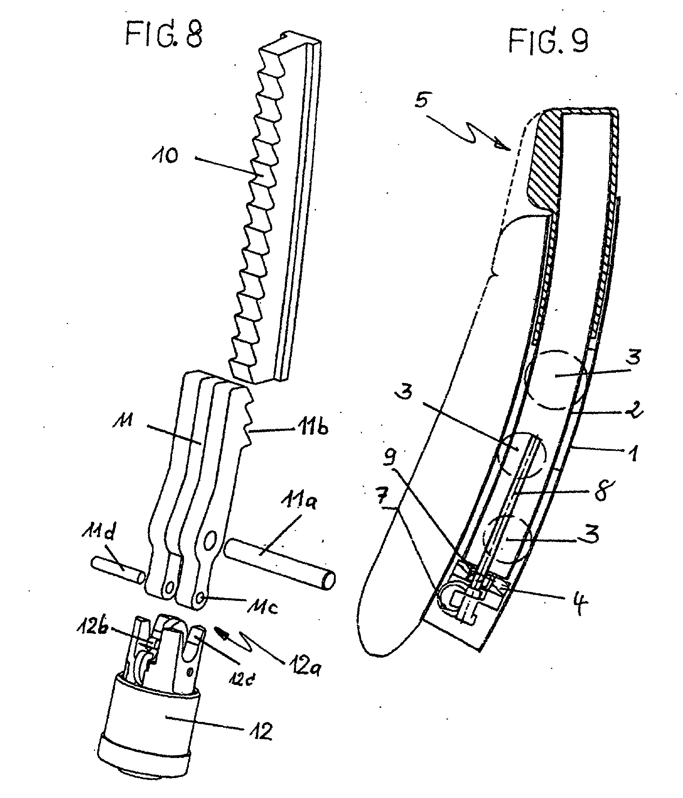

Der Aufbau der Verriegelungsklinke 11 und ihr Wirkeingriff mit dem Aktuator 12 ist in den Ausschnittvergrößerungen nach Fig. 6 und 7 sowie in der Explosionsdarstellung nach Fig. 8 dargestellt. Danach besteht in der dargestellten ersten Ausführungsform die Verriegelungsklinke 11 aus einem zweiarmigen Hebel, der drehbar um die Welle 11a in dem inneren Kastenprofil 2 gehaltert ist, wie bereits erläutert wurde. An dem einen, längeren Hebelarm befinden sich die Gegenzähne 11b für den Wirkeingriff mit der Zahnstange 10 nach einer Crash-Auslösung des Überrollbügels zur Sicherung der ausgefahrenen Lage des Überrollbügels. An dem anderen, kurzen und zweigeteilten Hebelarm ist eine Bohrung 11c angebracht, die einen Verriegelungsstift 11d, auch Verrastbolzen genannt, aufnimmt, der mit einem hakenförmigen Verriegelungselement 12b des Aktuators 12, das Auslösesystem 12a bildend, in lösbaren verriegelnden Wirkeingriff bringbar ist. Wenn der Aktuator im Überschlagfall durch entsprechende Sensoren angesteuert wird, gibt das hakenförmige Verriegelungselement 12b den Verriegelungsstift 11d frei, wodurch, wie in den Fig. 4-6 dargestellt, durch die Kraft der Druckfeder 13 die Gegeazähne 11b in Wirkeingriff mit der Zahnstange 10 treten, so daß der Überrollbügel beim Aufprall auf die Erde während des Überschlages nicht aus der ausgefahrenen Position zurückgeschoben werden kann.

Bei normalem Betrieb, wie er in den Fig. 1-3 dargestellt ist, tritt die Verriegelungsklinke dagegen nicht in Wirkeingriff mit der Zahnstange 10, da das hakenförmige Verriegelungselement 12b des Aktuators 12 den Verriegelungshebel 11 gegen die Kraft der Druckfedern 13 in Position hält.

Für die Verriegelung der Verriegelungsklinke 11 mit dem Aktuator 12 stehen dem Fachmann eine Reihe von Möglichkeiten zur Verfügung, von denen einige in der DE 43 42 401 A1 dargestellt sind.

Die erfindungsgemäß angetriebene Kopfstütze mit Überrollschutzfunktion arbeitet wie folgt:

Im Normalbetrieb ist die Verriegelungsklinke 11 in dem Aktuator 12 verriegelt, wobei die Druckfedern 13 vorgespannt sind. Durch Betätigen des elektrischen Antriebes 10 kann die Traverse 4 mit ihrer Spindelmutter 9 mittels der Antriebsspindel 8 nach oben und unten verfahren werden. Da das innere Kastenprofil 2 mit der Traverse 4, geführt mittels der Rollen 3, verbunden ist, wird somit die aufgeschäumte Kopfstütze 5 entsprechend verfahren, wobei die Laufrollen 3 für die notwendige Führung im äußeren Kastenprofil 1 sorgen (siehe auch Fig. 9 und 10).

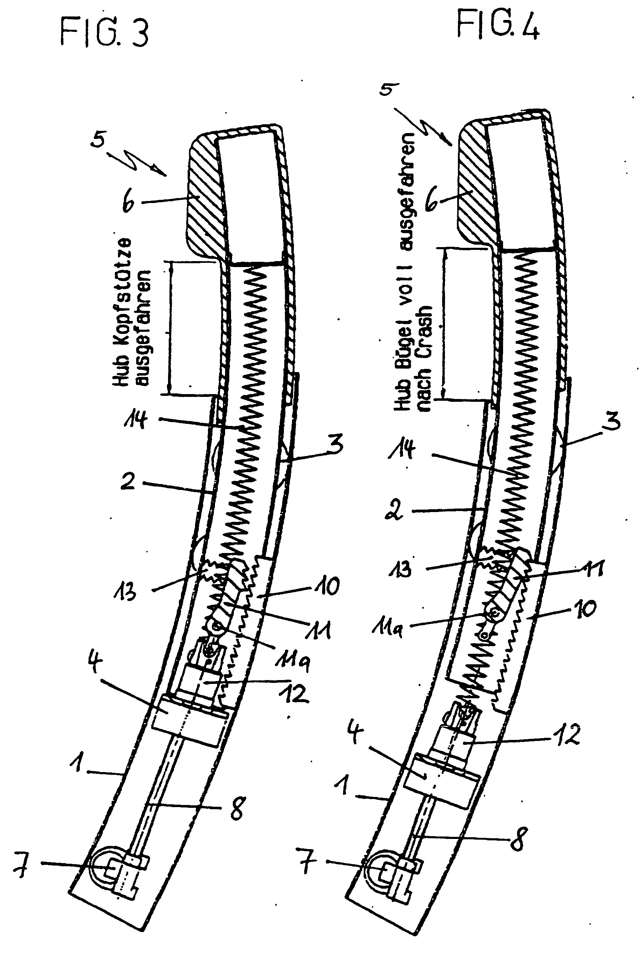

In der Fig. 1 ist dabei der vollständig eingefahrene Zustand der Kopfstütze gezeigt. In der Darstellung nach Fig. 2 ist die Kopfstütze zum Teil ausgefahren (Teilhub) und in der Darstellung nach Fig. 3 ist die Kopfstütze 5 vollständig ausgefahren.

Bei einem von den Fahrzeugsensoren erfaßten Überschlagfall wird der Aktuator 12 ausgelöst. Dadurch wird das Auslösesystem 12a durch Freigabe des Verriegelungsstiftes 11d der Verriegelungsklinke 11 entriegelt und die vorgespannte Druckfeder 14 treibt dabei das innere Kastenprofil in die obere Endstellung, wie in den Fig. 4 und 5 dargestellt ist. Die Druckfedern 13 bringen dabei die nunmehr verschwenkbare Verriegelungsklinke 11 in Wirkeingriff mit der Zahnstange 10 (siehe auch Fig. 6).

Dieses Auslösen kann dabei in jeder Stellung der ausgefahrenen Kopfstütze geschehen. So zeigt die Fig. 4 die Crash-Endstellung bei zum Teil entsprechend der Fig. 2 bei ausgefahrener Kopfstütze, und die Fig. 5 die Crash-Endstellung bei entsprechend Fig. 3 vollständig ausgefahrener Kopfstütze 5.

Wie man aus diesen Figuren erkennt, bewegt sich nach einer Crash-Auslösung die Verriegelungsklinke 11 mit dem inneren Kastenprofil 2, wobei dieses innere Kastenprofil 2 von der Traverse 4 abhebt, nach oben, wogegen die Traverse 4 mit dem darauf befindlichen Aktuator 12 in der Auslösestellung verbleibt.

Nach einer ungewollten Auslösung kann das System durch Heranfahren der Traverse 4 an das innere Kastenprofil in der oberen Endstellung automatisch reversiert werden. Während der Anfahrbewegung werden die Druckfedern 13 wieder vorgespannt und die Verriegelungsklinke 11 durch an dem Aktuator 12 (oder an der Traverse 4) angebrachte Betätigungsschrägen 12c in Öffnungsstellung gebracht und die Halteklinke 12b des Aktuators 12 wieder geschlossen (Fig. 7 und 8). Die Verriegelungsklinke 11 befindet sich dann nicht mehr mit der Zahnstange 10 in Wirkeingriff und das innere Kastenprofil 2 ist somit wieder frei beweglich.

Das äußere Kastenprofil 1, die Kassette, ist vorzugsweise direkt hinter den Fahrzeugsitzen, bei einem zweisitzigen Cabriolet an der Rückwand, verankert.

In der Fig. 11 ist eine alternative Ausführungsform der Verriegelungsklinke 11 dargestellt, die eine noch höhere Sicherheit der Verriegelung bei einem Überschlag als die Verriegelungsklinke gemäß Fig. 8 bildet. Bei dieser alternativen Ausführungsform ist die. Verriegelungsklinke 11 als einarmiger Hebel ausgebildet, der mittels Stiftes 11a drehbar am inneren Kastenprofil 2 angelenkt ist, und der am anderen Ende die Gegenzähne 11b und die Bohrung 11c besitzt, in welcher der Verriegelungsstift 11d, der Verrastbolzen, aufgenommen ist. Dieser Verriegelungsstift 11d ist mit dem hakenförmigen Verriegelungselement 12b des Aktuators 12 in einen lösbaren, verriegelnden Wirkeingriff bringbar, wie es in Fig. 12 dargestellt ist. Bei Verschwenkung des hakenförmigen Verriegelungselementes 12d im Überschlagsfall wird der Verriegelungsstift 11d und damit der Schnellantrieb mittels der Feder 14 freigegeben.

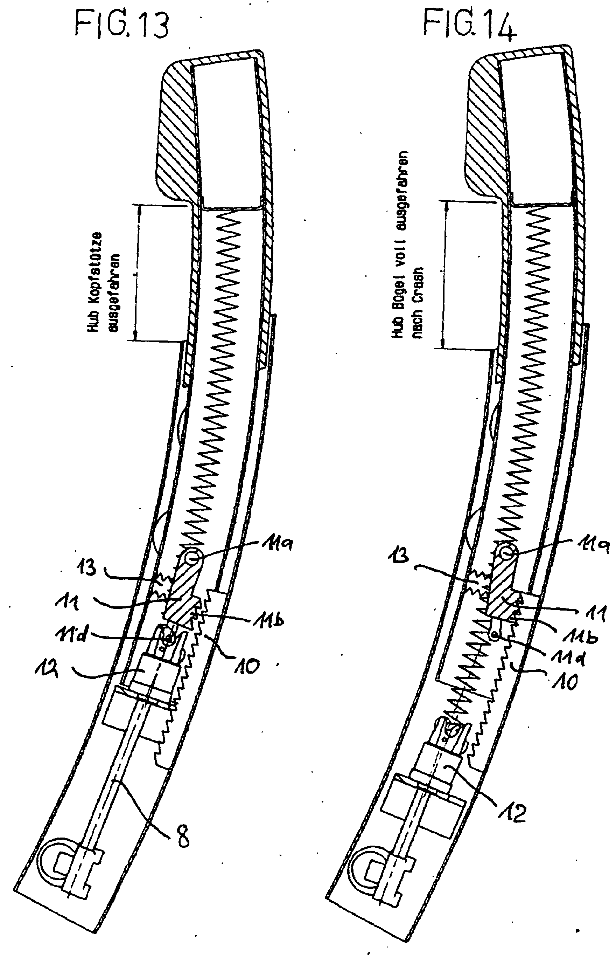

Aus der Fig. 13, die die Stellung des Überrollbügels entsprechend Fig. 3 zeigt, ist ersichtlich, daß die Druckfedern 13 die einarmige Verriegelungsklinke 11 in Richtung Zahnstange 10 vorspannen, wobei der im Aktuator 12 verriegelte Verrastbolzen 11d verhindert, daß die Verriegelungsklinke 11 mit ihren Gegenzähnen 11b in Wirkeingriff mit den Zähnen der Zahnstange 10 kommt.

Ist gemäß der Darstellung in Fig. 14 - analog derjenigen in Fig. 4 - die Verriegelungsklinke 11 freigegeben, drücken die Druckfedern 13 den einarmigen Hebel, d. h. die Gegenzähne 11b der Verriegelungsklinke 11 in einen Wirkeingriff mit den Zähnen der Zahnstange 10 und verhindern ein Einfahren des Überrollbügels im Überschlagfall, wobei das Kräftediagramm günstiger als bei der Ausbildung der Verriegelungsklinke als zweiarmiger Hebel entsprechend der Fig. 8 ist.

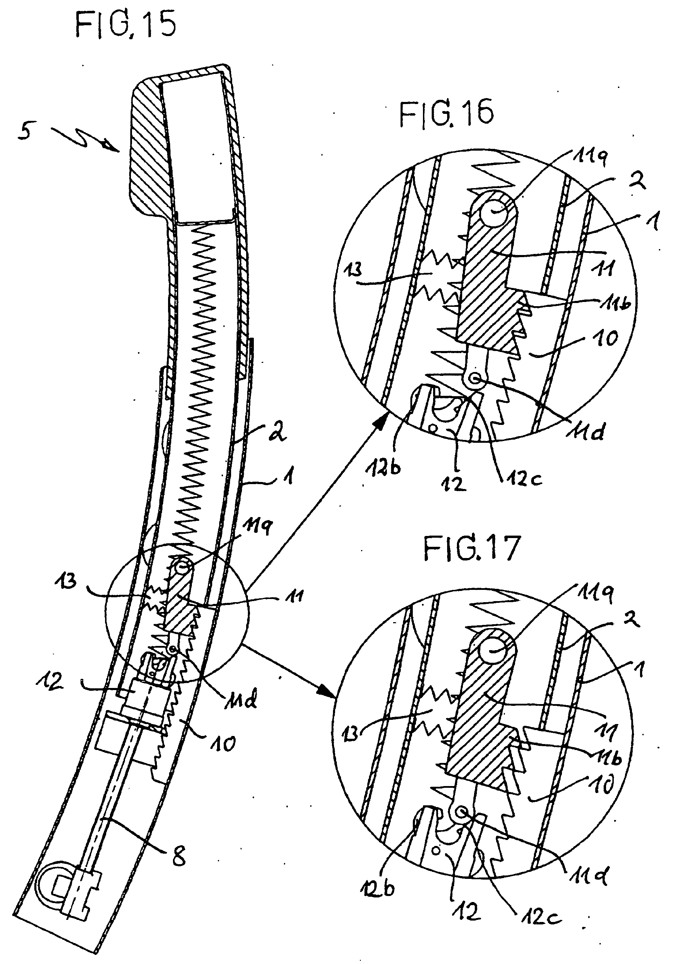

Die Figuren 15 bis 17 verdeutlichen den automatischen Rerversiervorgang bei der alternativen Ausführungsform der Verriegelungsklinke nach Fig. 11 nach einer Auslösung. Der Aktuator 12 wird zunächst durch die mittels der Spindel 8 elektromototrisch angetriebene Traverse, den Komfortantrieb, an das untere Ende der einarmigen Verriegelungsklinke 11 herangefahren (Fig. 15 und 16). Bei einer weiteren Verfahrbewegung kommt dann dieses Hebelende über die Einlaufschräge 12c wieder in den Wirkeingriff mit dem hakenförmigen Verriegelungselemente 12b unter Trennung der Gegenzähne 11b von der Zahnstange 10 (Fig. 17). Durch ein Abwärtsfahren der Traverse kann dann bei völlig getrennten Zähnen das innere Kastenprofil 2 mit der Kopfstütze 5 wieder in die Ausgangsstellung nach unten verfahren werden.

Es versteht sich, daß anstelle einer gekrümmten Bewegungsbahn auch gerade Kastenprofile mit einer linearen Bewegungsbahn vorgesehen sein können, wobei das äußere Kastenprofil, die Kassette, in einer entsprechenden Position hinter den Fahrzeugsitzen des Fahrzeuges fest angebracht ist und als Kassette alle notwendigen Antriebs- und Verriegelungsmittel aufnimmt.

Ein derart ausgebildetes Überroll-Schutzsystem ist in den Figuren 18 und 19 in zwei verschiedenen Ausfahrstellungen der Kopfstütze dargestellt. Bei der Ausführungsform des Überroll-Schutzsystems nach den Figuren 18 und 19 ist die Kopfstütze 5 nicht in dem inneren Kastenprofil 2, welches in dem äußeren Kastenprofil 1 geführt wird, integriert. Die Kopfstütze 5 ist über zwei in der äußeren Kassette geführte Stangen 16 fest mit der Traverse 4 verbunden, die mittels der Spindel 18 bzw. des Antriebes 7 als Komfortantrieb auf- und nieder verfahrbar ist. Auf dieser Traverse 4 sind, analog der ersten Ausführungsform der Erfindung mit der gekrümmten Bewegungsbahn, der Aktuator 12 und die Antriebs-Druckfeder 14 befestigt. Das Auslösesystem 12a bzw. die Verriegelung mit der Verriegelungsklinke 11 ist bei den Darstellungen der Figuren 18 und 19 nicht sichtbar; sie entspricht derjenigen gemäß den bereits beschriebenen Ausführungsbeispielen.

Im Vorstehenden wurde eine Kopfstütze mit integrierter Überrollschutzfunktion beschrieben, die sich, angetrieben durch einen Elektromotor, stufenlos in beliebige Stellungen ausfahren läßt, sei es auf einer Kurvenbahn oder auf einer geradlinigen Bewegungsbahn. Aus jeder Stellung heraus kann in einer Gefahrensitutation das Überrollschutzsystem in die maximale Endstellung gebracht werden.

## Patentansprüche

1. Überroll-Schutzsystem für Kraftfahrzeuge mit integrierter Kopfstütze, das jeweils einem Fahrzeugsitz zugeordnet ist, mit
- einem äußeren, eine Kassette für die Komponenten des Überroll-Schutzsystems bildenden, fahrzeugfest anbringbaren Kastenprofil-Körper (1),
- einem inneren, verschiebbar in dem äußeren Kastenprofil-Körper (1) über Führungselemente (3) gehalterten Profilkörper (2), der als Überrollkörper ausgelegt ist, und
- einer Antriebsanordnung (7) für ein kontinuierliches Verfahren des inneren Profilkörpers (2), bestehend aus einem Elektromotor mit Getriebe und einer Gewindespindel (8) vorgegebener Länge sowie aus einer in dem äußeren Kastenprofil-Körper (1) verschiebbaren Traverse (4) des inneren Profilkörpers (2), die eine Mutter (9) zum Wirkeingriff mit der Gewindespindel (8) besitzt,
**dadurch gekennzeichnet, daß** die Traverse (4) mit dem inneren, aus einem Kastenprofil gebildeten Profilkörper (2), der einen gesonderten Schnellantrieb (14) für ein Ausfahren dieses Kastenprofils in die obere, gegenüber dem äußeren Kastenprofil-Körper (1) verriegelbare Schutz-Endstellung im Gefahrenfall aufnimmt, sensorgesteuert im Gefahrenfall lösbar, verbunden ist, und dass der Schnellantrieb durch eine vorgespannte Antriebs-Druckfeder (14) gebildet ist, die in dem inneren Kastenprofil (2) angeordnet ist, und die sich mit einem, dem oberen Ende, an einem oberen Quersteg (15) des inneren Kastenprofils (2) abstützt und die mit ihrem anderen, unteren Ende, mit der Traverse (4) in fester Verbindung steht.

2. Überroll-Schutzsystem nach Anspruch 1, **dadurch gekennzeichnet, daß** am oberen Teil des inneren Kastenprofils (2) ein die Kopfstütze (5) bildendes Kopfstützenpolster (15) angeformt ist.

3. Überroll-Schutzsystem nach Anspruch 1, **dadurch gekennzeichnet, daß** neben dem inneren Kastenprofil (2) parallel zu diesem mindestens ein weiterer langgestreckter, in dem äußeren Kastenprofil (1) geführter Formkörper (16) auf der Traverse (4) befestigt ist, an dem im oberen Bereich insassenzugewandt vor dem inneren Kastenprofil (2) ein die Kopfstütze (5) bildendes Kopfstützenpolster angeformt ist.

4. Überroll-Schutzsystem nach einem der Ansprüche 1 bis 3, **dadurch gekennzeichnet, daß** an dem inneren Kastenprofil (2) als Führungselemente Führungsrollen (3) angebracht sind und im äußeren Kastenprofil (1) Führungsrillen (3 a) zur Führung der Führungsrollen (3) und der Traverse (4) ausgeformt sind.

5. Überroll-Schutzsystem nach einem der Ansprüche 1 bis 4, **dadurch gekennzeichnet, daß** das innere Kastenprofil (2) über ein dieses Kastenprofil im Gefahrenfall freigebendes Auslösesystem (12 a) mit einem im Gefahrenfall aktivierbaren Aktuator (12) verbunden ist, der fest auf der Traverse (4) angebracht ist.

6. Überroll-Schutzsystem nach Anspruch 5, **dadurch gekennzeichnet, daß** an dem inneren Kastenprofil (2) über eine Welle (11a) eine Verriegelungsklinke (11) mit Zahnprofil (11 b) angelenkt ist, die über das Auslösesystem (12 a) mit dem im Gefahrenfall aktivierten Aktuator (12) lösbar verbunden ist.

7. Überroll-Schutzsystem nach Anspruch 6, **dadurch gekennzeichnet, daß** im Innern des äußeren Kastenprofils (1) eine Zahnstange (10) fest angebracht ist, mit der das Zahnprofil (11 b) der Verriegelungsklinke (11) im Gefahrenfall nach Freigabe der Verriegelungsklinke durch das Auslösesystem (12 a) mittels an der Verriegelungsklinke (11) angreifender Druckfedern (13) in Wirkverbindung bringbar ist.

8. Überroll-Schutzsystem nach Anspruch 7, **dadurch gekennzeichnet, daß** die Verriegelungsklinke (11) als zweiarmiger Hebel ausgebildet ist, mit einem gegenüber der Anlenkung längeren, oberen und einem kürzeren, unteren Hebelarm, wobei an dem längeren, oberen Hebelarm, an dem die Druckfedern (13) angreifen, das Zahnprofil (11 b), und an dem kürzeren, unteren Hebelarm ein Verrastbolzen (11d) für einen lösbaren Wirkeingriff mit einem hakenförmigen Verriegelungselement (12 b) des Aktuators (12), das Auslösesystem (12a) bildend, angebracht ist.

9. Überroll-Schutzsystem nach Anspruch 7, **dadurch gekennzeichnet, daß** die Verriegelungsklinke (11) als einarmiger Hebel ausgebildet ist, der am oberen Ende über die Welle (11a) an dem inneren Kastenprofil (2) angelenkt ist, der in einem Zwischenabschnitt, an dem die Druckfedern (13) angreifen, mit dem Zahnprofil (11b) versehen ist, und an dessen unterem Ende ein Verrastbolzen (11d) für einen lösbaren Wirkeingriff mit einem hakenförmigen Verriegelungselement (12b) des Aktuators (12), das Auslösesystem (12a) bildend, angebracht ist.

10. Überroll-Schutzsystem nach einem der Ansprüche 6 bis 9, **dadurch gekennzeichnet, daß** am Aktuator (12) eine Einlaufschräge (12c) für das untere Ende des Verriegelungselementes (11) ausgebildet ist.

11. Überroll-Schutzsystem nach einem der Ansprüche 6 bis 9, **dadurch gekennzeichnet, daß** das untere Ende der Antriebs-Druckfeder (14) an dem Aktuator (12) oder direkt an der Traverse (4) befestigt ist.

12. Überroll-Schutzsystem nach einem der Ansprüche 1 bis 11, **dadurch gekennzeichnet, daß** sowohl das innere als auch das äußere Kastenprofil (1, 2) kreisbogenförmig gekrümmt sind und das äußere Kastenprofil (1) hinter dem Fahrzeugsitz, vorzugsweise an der Fahrzeugrückwand, befestigt ist.

## Claims

1. Roll-over protection system for motor vehicles with integrated head restraints, which is associated with each vehicle seat, having
- an outer box profile body (1), which is arranged to be mounted fixedly on the vehicle and forms a casing for the components of the roll-over protection system,
- an inner profile body (2), which is designed as a roll-over bar and retained in the outer box profile body (1) so as to slide via guide elements (3), and
- a drive arrangement (7) for a continuous movement of the inner profile body (2), comprising an electric motor with gear mechanism and a threaded spindle (8) of predetermined length as well as a crossbar (4) of the inner profile body (2) slidable in the outer box profile body (1), the crossbar having a nut (9) for operative engagement with the threaded spindle (8),
**characterised in that** the crossbar (4) is connected, such that it is detachable under sensor control in the event of danger, to the inner profile body (2) formed from a box profile, which receives a separate fast drive (14) for extension of this box profile in the event of danger into the upper end protection position lockable with respect to the outer box profile body (1), and **in that** the fast drive is formed by a pre-tensioned driving compression spring (14), which is arranged in the inner box profile (2) and which is supported with its one end, the upper end, at an upper cross-piece (15) of the inner box profile (2) and with its other, lower, end is in fixed connection with the crossbar (4).

2. Roll-over protection system according to claim 1, **characterised in that** a head restraint cushion (15) forming the head restraint (5) is integrally formed with the upper part of the inner box profile (2).

3. Roll-over protection system according to claim 1, **characterised in that**, in addition to the inner box profile (2), parallel thereto at least one further elongate shaped body (16), guided in the outer box profile (1), is secured to the crossbar (4), with which shaped body a head restraint cushion forming the head restraint (5) is integrally formed in the upper region facing a passenger, in front of the inner box profile (2).

4. Roll-over protection system according to any one of claims 1 to 3, **characterised in that** guide rollers (3) as guide elements are mounted on the inner box profile (2) and guide grooves (3a) for guiding the guide rollers (3) and the crossbar (4) are formed in the outer box profile (1).

5. Roll-over protection system according to any one of claims 1 to 4, **characterised in that** the inner box profile (2) is connected via a release system (12a) releasing this box profile in the event of danger to an actuator (12), which is fixedly mounted on the crossbar (4) and is activatable in the event of danger.

6. Roll-over protection system according to claim 5, **characterised in that** a locking pawl (11) having a toothed profile (11b) is articulated via a shaft (11a) on the inner box profile (2) and is detachably connected via the release system (12a) to the actuator (12) activated in the event of danger.

7. Roll-over protection system according to claim 6, **characterised in that** inside the outer box profile (1) a toothed rack (10) is fixedly mounted, with which the toothed profile (11b) of the locking pawl (11), in the event of danger after release of the locking pawl by the release system (12a), can be brought into operative engagement by means of compression springs (13) acting on the locking pawl (11).

8. Roll-over protection system according to claim 7, **characterised in that** the locking pawl (11) is in the form of a two-armed lever, having, in relation to the linkage point, a longer, upper lever arm and a shorter, lower lever arm, the toothed profile (11b) being provided on the longer, upper lever arm on which the compression springs (13) act and a locking bolt (11d) for detachable operative engagement with a hook-form locking element (12b) of the actuator (12), forming the release system (12a),being provided on the shorter, lower lever arm.

9. Roll-over protection system according to claim 7, **characterised in that** the locking pawl (11) is in the form of a one-armed lever, which at its upper end is articulated via the shaft (11a) on the inner box profile (2), is provided in an intermediate section, on which the compression springs (13) act, with the toothed profile (11b), and at the lower end of the lever there is arranged a locking bolt (11d) for detachable operative engagement with a hook-form locking element (12b) of the actuator (12), forming the release system (12a).

10. Roll-over protection system according to any one of claims 6 to 9, **characterised in that** a run-up slope (12c) for the lower end of the locking element (11) is formed on the actuator (12).

11. Roll-over protection system according to any one of claims 6 to 9, **characterised in that** the lower end of the driving compression spring (14) is fixed to the actuator (12) or directly to the crossbar (4).

12. Roll-over protection system according to any one of claims 1 to 11, **characterised in that** both the inner and the outer box profile (1, 2) are curved in a circular arc and the outer box profile (1) is fixed behind the vehicle seat, preferably to the vehicle rear wall.

## Revendications

1. Système de protection au retournement pour des véhicules automobiles à appuie-tête intégré, qui est individuellement associé à un siège du véhicule, avec
- un corps profilé en caisson extérieur (1), qui peut être installé fixement sur le véhicule et constitue un boîtier pour les composants du système de protection au retournement,
- un corps profilé intérieur (2), qui est maintenu à déplacement dans le corps profilé en caisson extérieur (1) via des éléments de guidage (3) et qui est conçu comme corps de protection au retournement, et
- un ensemble d'entraînement (7) pour un déplacement continu du corps profilé intérieur (2), constitué d'un moteur électrique avec transmission et d'une broche filetée (8) de longueur prescrite, ainsi que d'une traverse (4) du corps profilé intérieur (2) qui peut être déplacée dans le corps profilé en caisson extérieur (1) et qui possède un écrou (9) destiné à un engagement,actif avec la broche filetée (8),
**caractérisé en ce que** la traverse (4) est reliée, de manière libérable sous la commande de capteurs en cas de danger, au corps profilé intérieur (2) qui est constitué d'un profilé en caisson et qui reçoit un entraînement rapide indépendant (14) pour déployer en cas de danger ce profilé en caisson dans la position terminale de protection supérieure, verrouillable par rapport au corps profilé en caisson extérieur (1), et **en ce que** l'entraînement rapide est constitué par un ressort de pression d'entraînement précontraint (14), qui est disposé dans le profilé en caisson intérieur (2) et qui s'appuie par une extrémité, l'extrémité supérieure, contre une branche transversale supérieure (15) du profilé en caisson intérieur (2), et est fixement relié à la traverse (4) par son autre extrémité, inférieure.

2. Système de protection au retournement selon la revendication 1, **caractérisé en ce qu'**un rembourrage appuie-tête (15) constituant l'appuie-tête (5) est formé sur la partie supérieure du profilé en caisson intérieur (2).

3. Système de protection au retournement selon la revendication 1, **caractérisé en ce que**, en plus du profilé en caisson intérieur (2) et parallèlement à ce dernier, au moins un corps façonné supplémentaire (16) oblong, guidé dans le profilé en caisson extérieur (1), est fixé sur la traverse (4), corps sur lequel est formé dans la région supérieure, placé devant le profilé en caisson intérieur (2) en étant tourné vers l'occupant du véhicule, un rembourrage appuie-tête constituant l'appuie-tête (5).

4. Système de protection au retournement selon l'une des revendications 1 à 3, **caractérisé en ce que** des galets de guidage (3) sont installés comme éléments de guidage sur le corps profilé intérieur (2), et des rainures de guidage (3a) sont formées dans le profilé en caisson extérieur (1) pour guider les galets de guidage (3) et la traverse (4).

5. Système de protection au retournement selon l'une des revendications 1 à 4, **caractérisé en ce que** le profilé en caisson intérieur (2) est relié, via un système de déclenchement (12a) qui libère ce profilé en caisson en cas de danger, à un actionneur (12) qui peut être activé en cas de danger et est installé fixement sur la traverse (4).

6. Système de protection au retournement selon la revendication 5, **caractérisé en ce qu'**un cliquet de verrouillage (11) à profil denté (11b) est articulé sur le profilé en caisson intérieur (2) par l'intermédiaire d'un arbre (11a), et il est relié de manière libérable, via le système de déclenchement (12a), à l'actionneur (12) activé en cas de danger.

7. Système de protection au retournement selon la revendication 6, **caractérisé en ce qu'**une crémaillère (10) est fixement installée à l'intérieur du profilé en caisson extérieur (1), avec laquelle le profil denté (11b) du cliquet de verrouillage (11) peut, au moyen de ressorts de pression (13) agissant sur le cliquet de verrouillage (11), être amené en liaison fonctionnelle en cas de danger à la suite de la libération du cliquet de verrouillage par le système de déclenchement (12a).

8. Système de protection au retournement selon la revendication 7, **caractérisé en ce que** le cliquet de verrouillage (11) est réalisé sous forme de levier à deux bras, avec un bras de levier supérieur, plus long par rapport à l'articulation, et un bras de levier inférieur, plus court, sachant que le profil denté (11b) est installé sur le bras de levier supérieur plus long sur lequel agissent les ressorts de pression (13), et qu'un goujon d'encliquetage (11d) est installé sur le bras de levier inférieur plus court et est destiné à un engagement actif libérable avec un élément de verrouillage (12b) en forme de crochet de l'actionneur (12), formant ainsi le système de déclenchement (12a).

9. Système de protection au retournement selon la revendication 7, **caractérisé en ce que** le cliquet de verrouillage (11) est réalisé sous forme de levier monobras, qui est articulé à l'extrémité supérieure par l'intermédiaire de l'arbre (11a) sur le profilé en caisson intérieur (2), qui est pourvu du profil denté (11b) dans une partie intermédiaire sur laquelle agissent les ressorts de pression (13), et à l'extrémité inférieure duquel est installé un goujon d'encliquetage (11d) destiné à un engagement actif libérable avec un élément de verrouillage (12b) en forme de crochet de l'actionneur (12), formant ainsi le système de déclenchement (12a).

10. Système de protection au retournement selon l'une des revendications 6 à 9, **caractérisé en ce qu'**un biais d'introduction (12c) pour l'extrémité inférieure de l'élément de verrouillage (11) est formé sur l'actionneur (12).

11. Système de protection au retournement selon l'une des revendications 6 à 9, **caractérisé en ce que** l'extrémité inférieure du ressort de pression d'entraînement (14) est fixée sur l'actionneur (12) ou directement sur la traverse (4).

12. Système de protection au retournement selon l'une des revendications 1 à 11, **caractérisé en ce que** le profilé en caisson extérieur (1) et le profilé en caisson intérieur (2) sont tous deux cintrés en arc de cercle, et le profilé en caisson extérieur (1) est fixé derrière le siège du véhicule, de préférence sur la paroi arrière du véhicule.
